# EUROPÄISCHE PATENTSCHRIFT

(11) **EP 1 468 787 B1**
(45) Veröffentlichungstag und Bekanntmachung des Hinweises auf die Patenterteilung: **06.12.2006**
(21) Anmeldenummer: 03009073.2
(22) Anmeldetag: 18.04.2003
(51) Int. Cl.: B25B 27/00, A01G 23/08, A01G 23/099, B27G 19/08, F15B 15/00, B66F 3/38, B66F 3/26

(54) **Universalhebe- und Spreizgerät**
Universal lifting device and spreader
Appareil universel de levage et de séparation

(43) Veröffentlichungstag der Anmeldung: 20.10.2004
(73) Patentinhaber: Beisteiner, Peter, 2812 Hollenthon (AT)
(72) Erfinder: Beisteiner, Peter, 2812 Hollenthon (AT)
(74) Vertreter: Grabherr, Claudia

(56) Entgegenhaltungen:
- US-A- 3 014 696
- US-A- 3 081 066
- US-A- 3 548 899
- US-A- 3 662 994
- US-A- 3 830 468
- US-A- 5 711 512

## Beschreibung

Die Erfindung betrifft ein Universalhebe- und Spreizgerät gemäß dem Oberbegriff von Anspruch 1. Solch ein Sprazgerät ist beispielsweise aus der US-A-5 771 512 oder des US-A-3 081 066 bekannt.

Bei bisher bekannten hydraulischen Hebehilfen mit angebauter Handpumpe erfolgt die Längenverstellung der Hubhöhe in Richtung Hub durch ein im Hubkolben befindliches Gewinde mit eingebrachter Schraube. Dies ermöglicht jedoch nur eine Längenverstellung, die geringer ist als die Länge des Hubkolbens.

Bei der Verwendung eines Hubzylinders als Spreizgerät ergibt sich das Problem, dass bei nicht parallelen Ansatzflächen, die von einander entfernt werden sollen, ein asymmetrischer Druck auf das Zylinder-Kolben-System ausgeübt wird. Dies kann vor allem bei großem Hub zu Fehlfunktionen des Zylinder-Kolben-Systems führen. Bei einer bereits bekannten Hebehilfe ist einseitig eine Schienenführung an einem Hubzylinder angebracht. Bei dieser verringert sich jedoch die Hubhöhe und es kann nicht die volle Hubkraft des Hubzylinders genutzt werden.

Weiters ergibt sich bei der Verwendung eines Hubzylinders als Spreizgerät, wie z.B. als Fällhilfe beim Fällen von Bäumen, das Problem, dass zum Einsetzen des Hubzylinders in den entsprechenden Spalt bzw. den Fällschnitt, ein entsprechend hoher und tiefer Ausschnitt vorhanden sein oder hergestellt werden muss, was entweder gar nicht möglich ist oder eine Wertminderung nach sich zieht.

Aufgabe der Erfindung ist es, diese Mängel zu beseitigen und eine Hebehilfe zu schaffen, welche für alle Höhen verschieden einstellbar und auch vom Boden weg seitlich Hebewirkung erbringt, und auch für direkte und seitliche Spreizvorgänge geeignet ist.

Diese Aufgabe wird durch ein Universalhebe- und Spreizgerät mit den Merkmalen gemäß Anspruch 1 gelöst.

Vorzugsweise ist am Zylindermantel eine abnehmbare Bodenplatte oder eine vorzugsweise abnehmbare untere Seitenklaue vorgesehen ist, je nach dem ob eine Abstützung am Boden oder in einem Spalt möglich ist, wobei die Seitenklaue individuell je nach Bedarf ausgestaltet werden kann.

Alternativ kann an der abnehmbaren Bodenplatte eine vorzugsweise abnehmbare untere Seitenklaue vorgesehen sein.

Gemäß einer bevorzugten Ausführungsform kann sich an die Hubplatte ein Aufsatz anschließen, der sich in die entgegengesetzte Richtung wie die Hülse erstreckt. Durch vorzugsweise lösbare Anbringung eines solchen Aufsatzes, der individuell z.B. zylindrisch oder in Form eines quadratischen Prismas ausgestaltet werden kann, oberhalb der Hülse können z.B. höhenverstellbare Teile fixiert werden, die in sich verschiebbar, in Teleskopform und gegebenenfalls mit zusätzlich einem Gewindeteil zur Längenanpassung versehen sind. Dadurch entsteht für jede gewünschte Höhe und durch die verschiedensten Einsätzen eine Hebehilfe mit sicherer Seitenführung und einer genauen exakten Höheneinstellung, wobei vorzugsweise der Aufsatz an die Form des Einsatzes angepasst ist und diesen seitlich umschließt. Die Hülse mit dem individuell ausgestalteten Aufsatz kann auch im Ganzen auswechselbar sein.

Vorteilhafterweise ist an der Hülse oder am Aufsatz eine vorzugsweise abnehmbare obere Seitenklaue vorzugsweise in ihrer Höhenposition verstellbar angebracht.

Oder es ist eine vorzugsweise abnehmbare obere Seitenklaue vorgesehen, die in beliebiger Position entlang der Hülse oder des Aufsatzes positioniert werden kann.

Durch die Hülse, die von der Hubplatte bis in den Bereich des unteren Ende des Zylinders reicht ist es möglich, die Seitenklauen durch eine höhenverstellbare Fixierungsvorrichtung auf jede Höhe auf dieser Hülse oder dem Aufsatz anzubringen. Dadurch können auch Gegenstände hochgehoben werden, welche nur seitlich aufgenommen werden können. Für die verschiedensten Einsatzmöglichkeiten können diese Seitenklauen auch individuell ausgestaltet, abnehmbar oder auch fest mit der Hülse oder dem Aufsatz verbunden werden.

Zum seitlichen Spreizen von verschiedensten Gegenständen kann gemeinsam mit der an der Hülse bzw. am Aufsatz angeordneten Seitenklaue die am Zylindermantel oder an der Bodenplatte angeordnete Seitenklaue verwendet werden. Es können, da die Seitenklaue an der Hülse bis zum unteren Ende verschoben werden kann, damit Spreizvorgänge ausgeführt werden, wo nur ein geringer Abstand zwischen den zu spreizenden Materialien vorhanden ist.

Bei der Verwendung des erfindungsgemäßen Gerätes als Fällhilfe wird dieses außen seitlich gegenüber der Fällrichtung am Fällgut angesetzt, wobei die am Zylindermantel oder an der Bodenplatte angebrachte Seitenklaue in den Fällschnitt oder in einem zusätzlichen Keileinschnitt eingebracht wird. Bei Bäumen mit geringem Stammdurchmesser wird über dem Fällschnitt auf Höhe der oberen an der Hülse oder am Aufsatz angebrachten Seitenklaue am Baum ein Keilausschnitt erzeugt. In diesen wird die obere Seitenklaue eingebracht. Beim anschließenden Hubvorgang wird, nachdem der Baum bereits dazu vorbereitet ist (in Fällrichtung Keilausschnitt auf Höhe des Fällschnittes und nur mehr schmaler Steg im Fällschnitt) durch Druck des Kolbens im Keileinschnitt und Gegendruck der unteren Seitenklaue im Fällschnitt der Baum in die richtige Fällrichtung gebracht.

Bei Bäumen mit starkem Stammdurchmesser kann der oberen an der Hülse oder dem Aufsatz angebrachten Seitenklaue, ohne einen Keileinschnitt und um ein Aufreißen des Baumstammes während des Fällvorganges zu vermeiden, gegenüber der Spitze ein Spannschloss angefügt werden. Diesem wird beiderseits eine Einhängevorrichtung in Schlitzform angeordnet, wo übliche Forstketten mit einzelnen Kettengliedern eingebracht werden können. Nachdem die Kette um den Baum gelegt ist, wird durch Einhängen der längs passenden Kettenglieder beiderseits des Kettenschlosses die Kette über das Spannschloss in Spannung gebracht. Dadurch wird die obere Seitenklaue in den Baum gedrückt und so am Baumstamm fixiert. Beim anschießenden Hubvorgang wird, wenn die beschriebenen Vorarbeiten bereits durchgeführt wurden, durch zusätzlichen Druck die obere Seitenklaue ohne die Möglichkeit der Aufsplitterung des Baumstammes gegen diesen gedrückt und dieser danach in die gewünschte Fällrichtung gebracht.

Durch die Erfindung entsteht eine hydraulische Hebe- und Spreizhilfe mit der Anordnungsmöglichkeit von zusätzlichen, universell verstellbaren und geformten mechanischen Längenteilen mit einer angepassten Seitenführung und einer höhenverstellbaren Seitenklaue und einer seitliche Bodenklaue, welche für die verschiedensten Ansprüche entsprechend geformt sein können.

In den Zeichnungen ist der Erfindungsgegenstand nur schematisch dargestellt, es zeigen:
Fig. 1 einen Zylinder mit Zylindermantel und Bodenplatte, mit aufgesetzter Hülse und mit an der Hubplatte greifendem Hubstempel im eingefahrenen Zustand;
Fig. 2 einen gleichen Zylinder im ausgefahrenen Zustand mit verschiedensten Anbauten;
Fig. 3 ein erfindungsgemäßes Gerät als Fällhilfe, das am Fällgut mit Seitenklauen und einer Spannkette angebracht wurde, wobei sich das Fällgut nach dem Hub in Schrägstellung befindet,
Fig. 4 das Fällgut im Querschnitt mit umlaufender Spannkette.

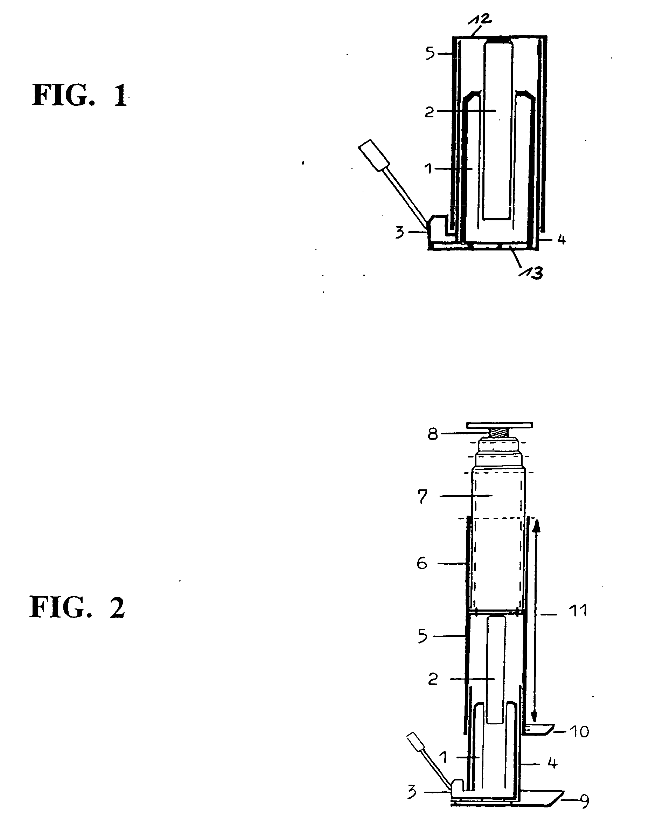

Es zeigt Fig. 1 den Zylinder 1, den Kolben 2, der hydraulisch mittels der Handpumpe 3 verschoben werden kann. Der Zylinder 1 ist vom nach oben offenen Zylindermantel 4 mit angefügter Bodenplatte 13 umgeben. Die Hülse 5 erstreckt sich von der am zylinderfernen Ende des Kolbens 2 angeordneten Hubplatte 12 zur Bodenplatte hin, um gibt den Zylindermantel 4 und wird von diesem bei Bewegung des Kolbens 2 geführt.

Fig. 2 zeigt das gleiche Gerät wie Fig. 1, jedoch mit zusätzlichem Aufsatz 6 auf der Hubplatte 12, welcher ein Teleskoprohr 7 mit Gewindeeinsatz 8 seitlich fixiert. An der Bodenplatte 13 ist eine untere Seitenklaue 9 und an der Hülse 5 ist eine obere Seitenklaue 10 mit einem Verschubbereich 11, der auch über den Aufsatz verläuft, angeordnet. Man erkennt, dass die beiden Seitenklauen 9 und 10 in Spalte mit geringer Höhe eingreifen können und dass durch Betätigung der Handpumpe 3 eine Spreizung über eine große Distanz erfolgen kann. So können z.B. beide Seitenklauen 9 und 10 in den Fällschnitt eines zu fällenden Baumes eingreifen, was insbesondere für Bäume geringeren Durchmessers geeignet ist.

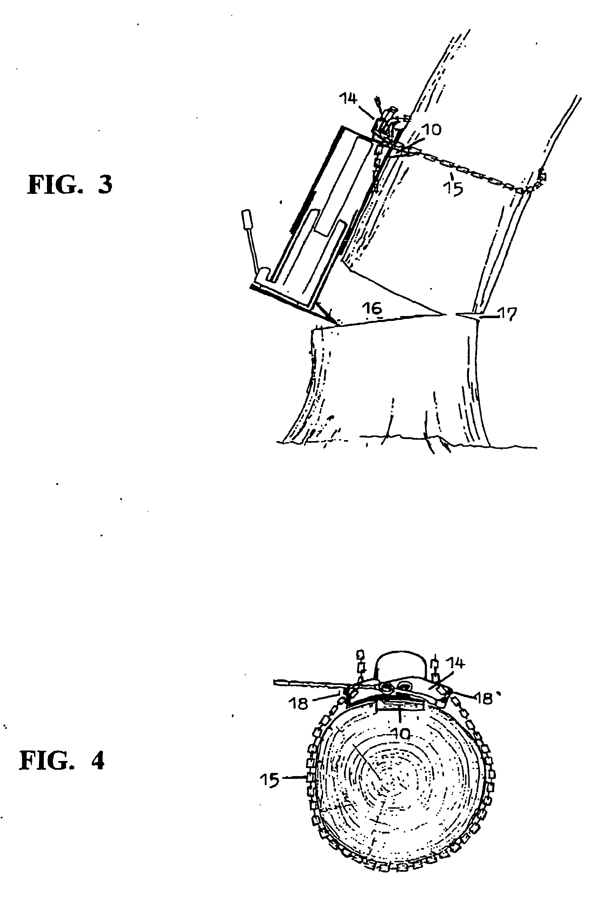

Die Fig. 3 zeigt einen für die Fällung bereits vorbereiteten Baum mit Fällschnitt 16 und mit Keileinschnitt 17 für die Fällrichtung. Das als Fällhilfe zum Einsatz kommende erfindungsgemäße Gerät ist seitlich angesetzt und greift mit seiner unteren Seitenklaue 9 in den Fällschnitt 16. Im Bereich der oberen Seitenklaue 10 ist der Spitze der Seitenklaue 10 gegenüberliegen ein Spannschloss 14, mit dem die Kette 15 gespannt wurde vorgesehen. Die Fällhilfe befindet sich in Hubstellung und der Baum neigt sich bereits in Fällrichtung.

Fig. 4 zeigt in Draufsicht die Spannkette 15 um einen Baum, die in Einhängevorrichtungen 18, 18' am Spannschloss 14 eingehängt ist und von diesem gespannt wird, wodurch die obere Seitenklaue 10 in den Baum gepresst wird. Beim Fällen des Baumes verbleibt die Spannkette 15 mit dem Spannschloss 14 am Fällgut, wohingegen sich die Hebevorrichtung vom Baum löst.

## Patentansprüche

1. Universalhebe- und Spreizgerät, mit einem Zylinder (1) und einem darin hydraulisch oder pneumatisch bewegbaren Kolben (2), der an seinem dem Zylinder (1) abgewandten Ende eine Hubplatte (12) trägt, wobei der Zylinder (1) von einem inneren Gehäuse (4) umgeben ist, das vorzugsweise länger als der Zylinder (1) ist, und die Hubplatte (12) mit einem äußeren Gehäuse verbunden ist, das sich zum Zylinder (1) hin erstreckt, das innere Gehäuse umgibt und von diesem geführt wird, **dadurch gekennzeichnet, dass** das innere Gehäuse eine zylinderförmige Hülse (4) und das äußere Gehäuse eine zylinderförmige Hülse (5) ist, und dass eine obere Seitenklaue (10) an der Hülse (5) oder an einem an dieser angeordneten Aufsatz (6) anbringbar ist.

2. Gerät nach Anspruch 1, **dadurch gekennzeichnet, dass** am Zylindermantel (4) eine abnehmbare Bodenplatte (13) oder eine vorzugsweise abnehmbare untere Seitenklaue (9) vorgesehen ist.

3. Gerät nach Anspruch 2, **dadurch gekennzeichnet, dass** an der abnehmbaren Bodenplatte eine vorzugsweise abnehmbare untere Seitenklaue (9) vorgesehen ist.

4. Gerät nach einem der vorhergehenden Ansprüche, **dadurch gekennzeichnet, dass** sich an die Hubplatte ein Aufsatz (6) anschließt, der sich in die entgegengesetzte Richtung wie die Hülse (5) erstreckt.

5. Gerät nach Anspruch 4, **dadurch gekennzeichnet, dass** der Aufsatz (6) zylinderförmig ist oder die Form eines quadratische Prismas hat.

6. Gerät nach Anspruch 4 oder 5, **dadurch gekennzeichnet, dass** der Aufsatz (6) einen höhenverstellbaren Einsatz (7) hält, wobei vorzugsweise der Aufsatz (6) an die Form des Einsatzes (7) angepasst ist und diesen seitlich umschließt.

7. Gerät nach einem der vorhergehenden Ansprüche, **dadurch gekennzeichnet, dass** die an der Hülse (5) oder am Aufsatz (6) angeordnete obere Seitenklaue (10) abnehmbar und/oder in ihrer Höhenposition verstellbar ist.

8. Gerät nach einem der Ansprüche 4 bis 6, **dadurch gekennzeichnet, dass** die obere Seitenklaue (10) in beliebiger Position entlang der Hülse (5) oder des Aufsatzes (6) positioniert werden kann.

9. Gerät nach einem der Ansprüche 7 bis 8, **dadurch gekennzeichnet, dass** an der der Seitenklaue (10) gegenüberliegenden Seite der Hülse (5) ein Spannschloss (14) zum Spannen einer beidseitig einhängbaren Kette (15) vorgesehen ist.

## Claims

1. Universal lifting and spreading device, having a cylinder (1) and a plunger (2) that is hydraulically or pneumatically movable therein and bears a lifting plate (12) at its end that is remote from the cylinder (1), with the cylinder (1) being surrounded by an inner housing (4), which is preferably longer than the cylinder (1), and the lifting plate (12) being connected to an outer housing which extends towards the cylinder (1), surrounds the inner housing and is guided by the latter, **characterised in that** the inner housing is a cylindrical sleeve (4) and the outer housing is a cylindrical sleeve (5), and **in that** an upper side claw (10) can be mounted on the sleeve (5) or on an attachment (6) arranged on the latter.

2. Device according to claim 1, **characterised in that** a removable base plate (13) or a lower side claw (9), which is preferably removable, is provided on the cylinder jacket (4).

3. Device according to claim 2, **characterised in that** a lower side claw (9), which is preferably removable, is provided on the removable base plate.

4. Device according to one of the preceding claims, **characterised in that** connected to the lifting plate there is an attachment (6) that extends like the sleeve (5) in the opposite direction.

5. Device according to claim 4, **characterised in that** the attachment (6) is cylindrical or has the shape of a square prism.

6. Device according to claim 4 or 5, **characterised in that** the attachment (6) holds a vertically adjustable insert (7), with the attachment (6) preferably being adapted to the shape of the insert (7) and enclosing the latter laterally.

7. Device according to one of the preceding claims, **characterised in that** the upper side claw (10) that is arranged on the sleeve (5) or on the attachment (6) is removable and/or is adjustable in terms of its position in a vertical sense.

8. Device according to one of claims 4 to 6, **characterised in that** the upper side claw (10) can be positioned in any position along the sleeve (5) or the attachment (6) .

9. Device according to one of claims 7 to 8, **characterised in that** provided on the side of the sleeve (5) lying opposite the side claw (10) there is a tension lock (14) for tensioning a chain (15) that can be hung up on both sides.

## Revendications

1. Appareil universel de levage et d'écartement comprenant un cylindre (1) et un piston (2) qui est déplaçable à l'intérieur de celui-ci de manière hydraulique ou pneumatique et qui, à son extrémité orientée à l'opposé du cylindre (1), porte une plaque de levage (12), le cylindre (1) étant entouré par un carter intérieur (4) qui est de préférence plus long que le cylindre (1), et la plaque de levage (12) étant reliée à un carter extérieur, lequel s'étend en direction du cylindre (1), entoure le carter intérieur et est guidé par celui-ci, **caractérisé en ce que** le carter intérieur est un fourreau cylindrique (4) et le carter extérieur est un fourreau cylindrique (5), et **en ce qu'**une griffe latérale supérieure (10) peut être montée sur le fourreau (5) ou sur une rallonge (6) disposée sur celui-ci.

2. Appareil selon la revendication 1, **caractérisé en ce qu'**un socle amovible (13) ou une griffe latérale inférieure de préférence amovible (9) est prévu sur l'enveloppe cylindrique (4).

3. Appareil selon la revendication 2, **caractérisé en ce qu'**une griffe latérale inférieure de préférence amovible (9) est prévue sur le socle amovible.

4. Appareil selon une des revendications précédentes, **caractérisé en ce qu'**une rallonge (6) s'étendant dans la direction opposée à celle du fourreau (5) se raccorde à la plaque de levage.

5. Appareil selon la revendication 4, **caractérisé en ce que** la rallonge (6) est cylindrique ou a la forme d'un prisme quadratique.

6. Appareil selon la revendication 4 ou 5, **caractérisé en ce que** la rallonge (6) comporte un insert réglable en hauteur (7), la rallonge (6) étant de préférence adaptée à la forme de l'insert (7) et entourant celui-ci latéralement.

7. Appareil selon une des revendications précédentes, **caractérisé en ce que** la griffe latérale supérieure (10) disposée sur le fourreau (5) ou sur la rallonge (6) est amovible et/ou réglable en hauteur.

8. Appareil selon une des revendications 4 à 6, **caractérisé en ce que** la griffe latérale supérieure (10) peut être positionnée dans une position quelconque le long du fourreau (5) ou de la rallonge (6).

9. Appareil selon une des revendications 7 à 8, **caractérisé en ce qu'**un tendeur (14) destiné à tendre une chaîne (15) accrochée de part et d'autre est prévu sur le côté du fourreau (5) situé à l'opposé de la griffe latérale (10).
